(19) Europäisches Patentamt
European Patent Office
Office européen des brevets

(11) **EP 1 739 411 B1**

(12) **EUROPÄISCHE PATENTSCHRIFT**

(45) Veröffentlichungstag und Bekanntmachung des Hinweises auf die Patenterteilung:
**18.02.2009 Patentblatt 2009/08**

(51) Int Cl.:
*G01N 22/00* (2006.01)      *G01N 22/02* (2006.01)
*A24C 5/34* (2006.01)

(21) Anmeldenummer: **05021075.6**

(22) Anmeldetag: **27.09.2005**

(54) **Vorrichtung und Verfahren zum Detektieren und Aussondern von fehlerhaften Zigaretten**

Apparatus and method for detecting and removing defective cigarettes

Dispositif et procédé pour détecter et rejeter des cigarettes défectueuses

(84) Benannte Vertragsstaaten:
**DE ES FR GB IT NL**

(30) Priorität: **01.07.2005 DE 202005010375 U**

(43) Veröffentlichungstag der Anmeldung:
**03.01.2007 Patentblatt 2007/01**

(73) Patentinhaber: **TEWS ELEKTRONIK Dipl.-Ing. Manfred Tews**
**22459 Hamburg (DE)**

(72) Erfinder:
• **Herrmann, Rainer**
**20253 Hamburg (DE)**
• **Schlemm, Udo, Dr.-Ing.**
**20259 Hamburg (DE)**
• **Richter, Hendrik**
**20253 Hamburg (DE)**

(74) Vertreter: **Glawe, Delfs, Moll**
**Patentanwälte**
**Rothenbaumchaussee 58**
**20148 Hamburg (DE)**

(56) Entgegenhaltungen:
**EP-A- 1 371 978          EP-A1- 0 857 651**
**EP-A1- 1 321 049         EP-A1- 1 330 961**
**EP-A1- 1 467 191         DE-A1- 4 004 119**
**DE-C1- 3 613 957         US-A- 3 993 194**

**Beschreibung**

Die Erfindung betrifft eine Vorrichtung und ein Verfahren zum Detektieren und Aussondern von fehlerhaften Zigaretten in einer Produktions/Verpackungsanlage für Zigaretten mit einer Vorrichtung, mit der fehlerhafte Zigaretten aus der geförderten Folge von Zigaretten ausgesondert werden.

Bei der Zigarettenproduktion wird in der Regel darauf geachtet, dass am Brand-Ende der Zigarette eine erhöhte Tabakdichte besteht, um ein Herausfallen des Tabaks durch die recht vielfältigen Bewegungen der Zigarette im Transport zwischen Zigarettenmaschine und Packmaschine oder auch später innerhalb der Packung zu vermeiden. Trotzdem kommt es immer wieder vor, zum Beispiel wenn der Tabak zu trocken wird, dass Tabak am Ende aus der Zigarette herausfällt. Die Anwesenheit von losem Tabak oder von Hohlräumen an den Zigarettenenden führt zu einem minderwertigen Produkt. Seit vielen Jahren werden deshalb im Prozess der Zigarettenherstellung Anstrengungen unternommen, um das Auftreten solcher fehlerhafter Zigaretten zu verhindern, vor allem durch Versuche, solche Fehlstellen zu detektieren und fehlerhafte Päckchen oder Zigaretten auszuwerfen.

Bisher sind als Methoden zur Detektion fehlerhafter Zigarettenenden vor allem elektromechanische Verfahren mit einem Stempel bzw. vielen Stempeln oder optische bzw. infrarote Messmethoden zum Einsatz gekommen.

Bei den seit Jahrzehnten bekannten elektromechanischen Verfahren (siehe z.B. GD-Anmeldung US 4 376 484 A vom 15.03.1983 oder DE 3 439 945 vom 20.06.1985,) wird ein Stempel oder eine Gruppe von Stempeln auf die Zigarettenenden zubewegt und die Eindringtiefe erfasst. Dazu muss für ein optimales Messergebnis die Zigarette exakt an der Position des Stempels zum Stehen gebracht werden, eine leichte Überlappung des Stempels mit dem Papierbereich der Zigarette würde das Messergebnis verfälschen. Bei den in der Packmaschine heutzutage vorherrschenden Geschwindigkeiten bedeutet dies eine gegen mechanische Zerstörung sehr empfindliche Messeinrichtung in der Maschine und eine negative Beeinflussung der möglichen Transport- und Maschinen-Geschwindigkeiten. Insbesondere im Eingangsbereich, wo zur Einzeldetektion und zum Einzelauswurf eine schnelle und präzise Positionierung extrem schwierig ist, hat diese Messmethode sich als zu ungenau erwiesen. Hinzu kommt, dass das Produkt durch den mechanischen Kontakt mit dem Stempel beeinträchtigt wird. Bestimmte kritische aber häufig vorkommende Formen einer Tabakleerstelle, wie die eines Konus, bei dem Tabak am Rand der Zigarette fehlt, in der Mitte aber noch vorhanden ist, lassen sich mit dieser Methode nur ungenau detektieren.

Um diese Unzulänglichkeiten zu überwinden, wurden in den letzten 30 Jahren immer wieder berührungslose Methoden entwickelt, die auf der Rückstreuung von Licht im sichtbaren Bereich oder im infraroten Bereich beruhen (siehe z.B. BAT, DE 2 236 218 A vom 29.03.1973 oder AMF Inc., DE 2 625 001 A vom 16.12.1976 oder Burrus SA, US 4 742 668 A vom 10.05.1988). Diese Verfahren haben den Vorteil, dass die Zigaretten nicht angehalten werden müssen, wenn sie sich mit ihrer Stirnfläche quer durch die Messzone der Sensoren bewegen. Dies erlaubt höhere Produktionsgeschwindigkeiten. Andererseits ist der Messeffekt, auf den man es hier abgesehen hat, die Reflexion des Lichtes an der Querschnittsfläche der Zigarette, ein reiner Oberflächeneffekt. Dadurch kann bereits eine einzelne Tabakfaser, die ein Tabakloch verdeckt, die Detektion dieses Defektes unmöglich machen. Auch hier können konische Fehlstellen, die in der Querschnittsmitte viel, am Papierrand aber wenig Tabak enthalten, nicht erkannt werden. Zusätzlich bewirken Farbschwankungen im Tabak-Blend oder Fluktuationen der Feuchte des Tabaks eine Veränderung des Reflexionsverhaltens, so dass eine relativ hohe Messunsicherheit bei der Detektion von defekten Zigaretten vorherrscht.

Ein weiterer Ansatz, fehlerhafte Zigaretten zu erkennen besteht in der Anwendung kapazitiver Sensoren. Ein solches Meßverfahren wird z.B. in der US 3 993 194 beschrieben. Mit den hier beschriebenen Meßkondensatoren ist eine schnelle Messung an bewegtem Produkt möglich. Der elektrische Feld erfaßt nicht nur die Oberfläche der Zigarette, sondern dringt auch in unter der Oberfläche liegende Bereiche ein. Über die Berücksichtigung von Feuchteschwankungen im Tabak (mit Ausnahme der Berücksichtigung von Schwankungen der Luftfeuchte) ist in der Entgegenhaltung nichts gesagt. Es ist auch nicht ersichtlich, wie diese berücksichtigt werden könnten.

Die Aufgabe der Erfindung besteht in der Schaffung eines Verfahrens, mit dem eine berührungslose Messung durchgeführt werden kann, die nicht nur die Oberfläche, sondern auch darunter liegende Bereiche der Zigaretten erfasst und außerdem unabhängig von Feuchteschwankungen im Meßgut ist.

Eine erfindungsgemäße Lösung in Form einer Vorrichtung ist in Anspruch 1 angegeben. Eine weitere Lösung besteht im Verfahren von Anspruch 14.

Die hochfrequenten elektromagnetischen Felder dringen an dem Ende der Zigarette (oder an beiden Enden, wenn an beiden Seiten Sensoren vorgesehen sind) in die Zigarette ein. Die hochfrequenten elektromagnetischen Felder werden nicht nur durch Fehler an der Oberfläche, sondern auch durch darunter liegende Fehler im Endbereich der Zigarette beeinflusst. Im Gegensatz zu z. B. den mechanischen Messverfahren werden auch Fehler festgestellt, bei denen der Tabak am Rand der Zigarette fehlt, in der Mitte aber noch vorhanden ist. Im Gegensatz zu optischen Verfahren hat die erfindungsgemäße Anordnung auch den Vorteil, dass sie nicht durch Farbschwankungen beeinflusst wird.

Mit dem von der Anmelderin entwickelten und beschriebenen Mikrowellen-Resonatorverfahren nach dem Patent *"Verfahren* zur Messung der Feuchte eines Messgutes mit Hilfe von Mikrowellen und Vorrichtung zur Durchführung des Verfahrens", (DE 4004 119 C2) ist eine Messung zweier unabhängiger Parameter möglich, die aus der Verschiebung der Resonanzfrequenz und der Verbreiterung der Resonanzkurve bestimmt werden. Diese beiden gemessenen Parameter wurden zunächst zur Realisierung einer masseunabhängigen Feuchtemessung benutzt (DE 4004 119 C2). Auch eine Profilmessung der Masse und der Feuchte von Objekten wurde bereits dokumentiert (TEWS Patent ‚Feuchte- und Dichtesensor' EP 0889 321 A1). Später wurde auch eine feuchteunabhängige Massemessung bei Verwendung von Resonatoren mit homogenem Messfeld beschrieben (z.B. TEWS Patentanmeldung "Mikrowellenvorrichtung zur Qualitätsprüfung strangförmiger Materialien" EP 1371979 A1).

Zur Detektion fehlerhafter Zigaretten mit Mikrowellenresonatoren muss eine Messung der flächenbezogenen Masse mit Hilfe eines Streufeldsensors durchgeführt werden. Eine Dichtemessung reicht dafür nicht aus, da in der Zigarettenspitze die Dichte oft sehr inhomogen verteilt ist, insbesondere bei der Anwesenheit von Fehlstellen. Für eine volumenbezogene Massemessung ist es nötig, dass die Stärke des Messfeldes in dem Bereich homogen ist, in dem das Messgut platziert wird. Zur Messung einer flächenbezogenen Masse ist es nötig, dass das Messfeld in zwei Dimensionen senkrecht zur Zigarettenachse mindestens über den Durchmesser einer Zigarette homogen ist. Nur so können Tabakdefektstellen unabhängig von ihrer Lage und der Feldverteilung mit gleicher Stärke detektiert werden. Bislang bekannte Streufeldresonatoren weisen jedoch ein in allen Raumrichtungen inhomogenes Feld auf. Erfindungsgemäß war für die Detektion von Fehlstellen in Zigarettenenden deshalb die Entwicklung neuer Streufeldsensoren nötig.

Neben der großen Homogenität des Sensorstreufeldes in zwei Dimensionen im Bereich des Zigarettenkopfes senkrecht zur Zigarettenachse zur Messung der flächenbezogenen Masse des Zigarettenendes muss ein Streufeldsensor die folgenden 5 Eigenschaften aufweisen:

1.) Um die flächenbezogene Masse einzelner Zigaretten messen zu können, muss ein Resonator eine ausreichend hohe Ortsauflösung aufweisen, d.h. das Messfeld muss außerhalb des Zigarettenkopfbereiches stark abfallen, damit die Messung nicht von benachbarten Zigaretten beeinflusst wird. Andererseits muss sich das Streufeld über den Zigarettenkopf hinweg mit der oben besprochenen Homogenität erstrecken.

2.) Ein Streufeldsensor muss ausreichend empfindlich sein, d.h. auch geringfügige Fehlstellen müssen mit dem Sensor signifikant detektiert werden können.

3.) Um eine fehlerfreie Messung der zwei Parameter des Mikrowellen-Resonator-Verfahrens von TEWS-Elektronik realisieren zu können, ist es notwendig, dass keine Mikrowellen-Feldenergie des Resonator-Streufeldes durch Abstrahlung in den Raum verloren geht.

4.) Um signifikant mehr Tabak der Zigarettenspitze zu erfassen, als es bei einer reinen Oberflächenmessung möglich ist, muss das Streufeld einige Millimeter tief in das Zigarettenende eindringen, ohne dass Mikrowellenenergie abgestrahlt wird.

5.) In der Resonatorgeometrie muss Platz für die Ein- und die Auskoppelantennen des Mikrowellensignals enthalten sein, so dass eine genügend starke Ankopplung des Sensors sichergestellt ist.

Zur Erfüllung der Messaufgabe ist im Allgemeinen ein Streufeldresonator mit Koaxial-Geometrie geeignet. Der Resonator besteht aus einem zylindrischen Hohlraum, dessen Öffnung in etwa den Durchmesser einer Zigarette hat. In diesem Hohlraum befindet sich ein zylindrischer Stift mit einer Länge, die ungefähr einer oder drei Viertel Wellenlänge des Mikrowellenfeldes entspricht. Folglich bildet sich zwischen der Wandung des Hohlraums und dem Stift eine stehende Welle mit etwa einer oder drei Viertel Wellenlänge aus. An der Öffnung des Resonators entsteht ein axialsymmetrisches Streufeld, das außerhalb des Resonators in axialer Richtung exponentiell abfällt.

Bei einem Koaxial-Resonator bestimmt hauptsächlich die Länge des Stiftes bzw. des Hohlraumes die Messfrequenz, welche im Frequenzbereich 1 bis 10 GHz, insbesondere von 2 bis 3 GHz liegen soll. Der Radius der Resonatoröffnung wird grob durch den Radius einer Zigarette festgelegt.

Ein wesentlicher Vorteil der Messung mit Mikrowellen besteht darin, dass die Masse beziehungsweise Materialdichte unabhängig von der Materialfeuchte bestimmt werden kann. Diese Unabhängigkeit von der Materialfeuchte ist auch deshalb wichtig, weil es im Zigaretten- Produktionsprozess öfter vorkommt, dass die Zigaretten auf dem Weg zwischen der Zigarettenmaschine und der Packmaschine, über den Umweg eines Puffers oder über den Transport durch Schragen, unterschiedlich lange verweilen und stark abtrocknen können. So ist es keine Seltenheit, dass die Tabakfeuchte in der Zigarette, insbesondere am Zigarettenende, zwischen 8% und 14% Feuchte schwankt. Darüber hinaus bietet die Mikrowellenmethode den Vorteil, dass sie parallel zum Messsignal der Masse am Ende der Zigarette die Tabakfeuchte anzeigt, d.h. auch gleich eine mögliche Ursache für einen vermehrten Kopfausfall detektieren kann, nämlich ein eventuell zu starkes Abtrocknen der Zigarette. Die Messung mit Mikrowellen hat auch den Vorteil, dass sie unabhängig von Farbschwankungen des Tabaks und der Tabakmischung selbst ist.

Die erfindungsgemäße Vorrichtung und das Verfahren ermöglichen es, sowohl einfacher und zuverlässiger als die bisher angewandten Verfahren fehlerhafte Zigaretten zu erkennen als auch diese auszuschleusen. Dabei ist es einerseits möglich, das Mikrowellen-Verfahren an Messpositionen einzusetzen, wo ganze Gruppen von Zigaretten gebildet werden und somit ganze Gruppen bei Vorliegen einer fehlerhaften Zigarette auszuwerfen. Andererseits kann dieses Verfahren auch für die Detektion von einzelnen Zigaretten und deren Einzelauswurf eingesetzt werden.

Ein Fehler ist bei Filterzigaretten auch dann vorhanden, wenn bei der Produktion kein Filterstück angesetzt wurde. Dies kann zusätzlich festgestellt werden, wenn Messungen an beiden Enden der Zigarette vorgenommen werden. Im Eingang einer Packmaschine werden die Zigaretten zunächst in einem breiten Trichter parallel zueinander aber senkrecht zu ihrer Längsrichtung bewegt und kurz vor Erreichen der Packmaschine in einzelnen Reihen geführt, wobei die Anzahl der Reihen der Zahl der Zigaretten in einer Packung entspricht. Wenn in jeder dieser Reihen ein Sensor zur Detektion fehlerhafter Zigaretten, oder zwei Sensoren zur Messung auf beiden Seiten der Zigarette, angebracht ist/sind, können einzelne fehlerhafte Zigaretten erkannt und zuverlässig ausgeschleust werden. Das ist als Idee seit langem bekannt, hat sich aber wegen der hohen Fehlerquote mit bisherigen Sensoren in der Praxis nicht durchsetzen können. Mit Mikrowellen-Resonatoren ist das aber möglich geworden.

Eine vorteilhafte Ausführungsform eines Koaxialresonators für die Erkennung defekter Zigaretten zeichnet sich dadurch aus, dass der Stift eine ungefähr um 1 bis 20% geringere Länge als die axiale Ausdehnung des Mikrowellenresonators hat. Insbesondere ist es vorteilhaft, dass der Stift eine ungefähr 2 bis 8% geringere Länge als die axiale Ausdehnung des Mikrowellenresonators hat.

Vorteilhafterweise beträgt dabei der Durchmesser des Stifts ungefähr 30 bis 90% des Innendurchmessers des Mikrowellenresonators. Besonders vorteilhaft ist es, dass der Durchmesser des Stifts ungefähr 65 bis 85% des Innendurchmessers des Mikrowellenresonators beträgt.

Bei einer anderen vorteilhaften Ausführungsform ist vorgesehen, dass der Mikrowellenresonator sich an seinem offenen Ende verjüngt und dann nach außen hin kegelstumpfförmig erweitert, und dass sich der Stift an diesem Ende des Mikrowellenresonators gleichzeitig kegelstumpfförmig verjüngt.

Der Durchmesser des Stifts beträgt dabei vorteilhafterweise ungefähr 30 bis 70% des Innendurchmessers des Mikrowellenresonators.

Die Öffnung des Mikrowellenresonators ist vorteilhafterweise mit einem Dielektrikum verschlossen, um das Eindringen von Verunreinigungen in den Mikrowellenresonator zu verhindern. Als besonders zweckmäßig hat sich erwiesen, wenn die Öffnung des Mikrowellenresonators mit einer Keramikscheibe verschlossen ist. Diese ist besonders abnutzungsfest, was von Vorteil ist durch die große Anzahl von Zigaretten, die bei der Massenproduktion sich an dem Sensor vorbeibewegen hergestellt werden.

Wenn die Mikrowellenresonatoren an einer Stelle vorgesehen sind, an der die Zigaretten in Gruppen zu mehreren Schichten angeordnet sind, wobei für jede Schicht ein Mikrowellenresonator (beziehungsweise zwei Mikrowellenresonatoren an beiden Enden der Zigaretten) vorgesehen ist/sind, ist der Vorteil, dass nur verhältnismäßig wenig Mikrowellenresonatoren benötigt werden. Der Nachteil ist, dass bei Detektion einer fehlerhaften Zigarette gleich die ganze Gruppe ausgestoßen werden muss.

Bei einer anderen vorteilhaften Ausführungsform ist daher vorgesehen, dass die Mikrowellenresonatoren an einer Stelle vorgesehen sind, an der die Zigaretten einzeln vorbeigeführt werden. Es ist dann eine größere Anzahl von Mikrowellenresonatoren und entsprechenden Auswertungsschaltungen erforderlich. Es braucht aber jeweils nur die fehlerhafte Zigarette ausgestoßen zu werden, was weniger Ausschuss bedeutet.

Die Erfindung wird im Folgenden an Hand vom vorteilhaften Ausführungsformen unter Bezugnahme auf die beigefügten Zeichnungen beschrieben. Es zeigen:

Fig. 1 links oben eine Ausführungsform des Sensors mit einer intakten Zigarette, rechts oben den Sensor mit einer fehlerhaften Zigarette und unten die Mikrowellenspektren für unterschiedliche Fälle;

Fig. 2 eine Detailansicht des Sensors der Fig. 1;

Fig. 3 eine weitere Darstellung des Sensors der Fig. 1 mit eingezeichneten Feldstärken;

Fig. 4 eine weitere Ausführungsform des Sensors der Erfindung;

Fig. 5 eine Darstellung des Sensors der Fig. 4 mit eingezeichneten Feldstärken;

Fig. 6 eine Darstellung der Vorrichtung zum Detektieren und Aussondern von Einzel-Zigaretten von der Seite;

Fig. 7 eine andere Vorrichtung zum Detektieren und Aussondern von Zigarettengruppen von der Seite; und

Fig. 8 einen beispielhaften Verlauf der flächenbezogenen Massemessung.

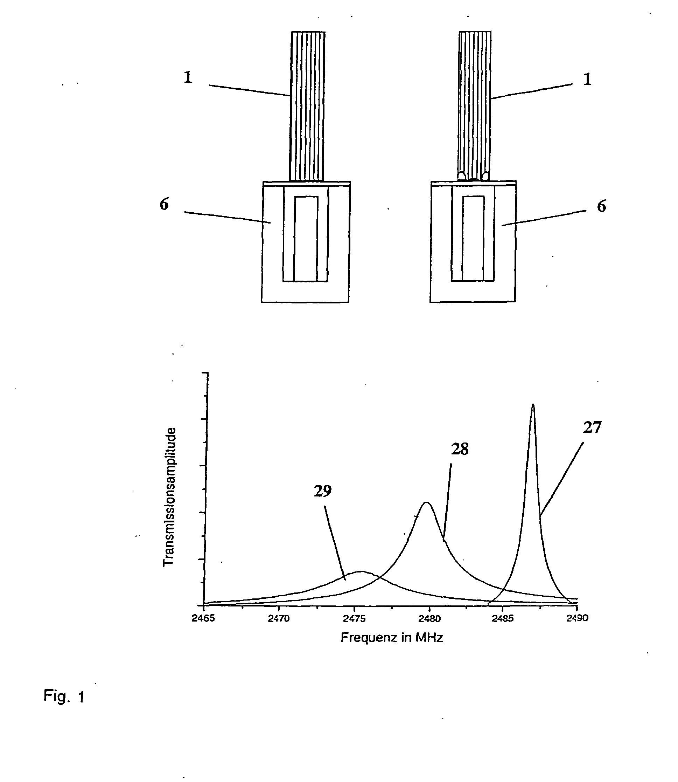

In Fig. 1 ist eine besonders vorteilhafte Ausführungsform des Sensors der Erfindung in Form eines Mikrowellenresonators 6 gezeigt. Vor dem Mikrowellenresonator 6 ist in der Darstellung links oben eine einwandfreie Zigarette 1 angeordnet, während in der Darstellung rechts oben eine fehlerhafte Zigarette 1 vor dem Mikrowellenresonator 6 angeordnet ist. Im unteren Teil der Fig. 1 sind die Resonanzfrequenzen für verschiedene Fälle dargestellt. Bei 27 ist die Resonanzkurve des leeren Mikrowellenresonators 6 dargestellt. Bei 29 ist die Resonanzkurve des Mikrowellenresonators 6 gezeigt, vor dem sich eine einwandfreie Zigarette 1 befindet. Mit 28 ist die Resonanzkurve des Mikrowellenresonators 6 bezeichnet, vor dem sich eine fehlerhafte Zigarette 1 befindet.

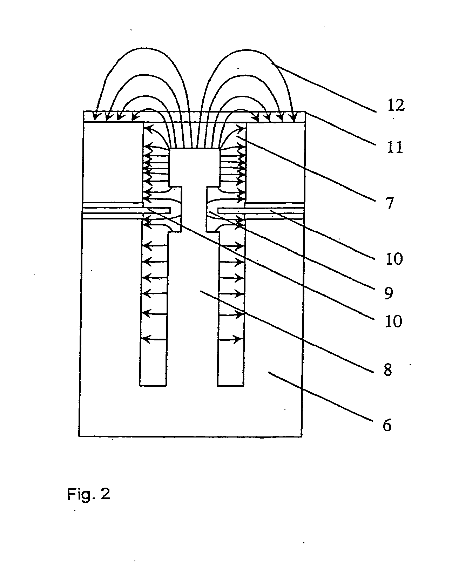

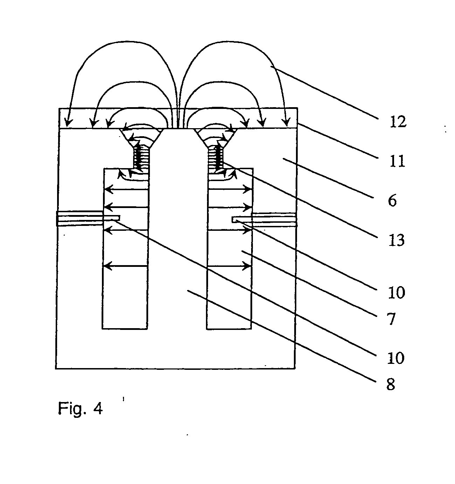

Beispiele für den Mikrowellenresonator 6 der Fig. 1 sind in Fig. 2 und Fig. 4 detaillierter dargestellt. Der Mikrowellenresonator 6 weist einen zylindrischen Resonatorhohlraum 7 auf, in dem auf der Achse des Resonatorhohlraums 7 ein Resonatorstift 8 angeordnet ist, der am Boden des Resonatorhohlraums 7 befestigt ist und ein wenig unterhalb der oberen Öffnung des Resonatorhohlraums 7 endet. Der Resonatorstift 8 ist mit einer Einschnürung 9 versehen, um dort Platz für Antennen 10 zu schaffen, mit denen die Mikrowellen ein- und ausgekoppelt werden. Die entsprechenden elektronischen Schaltungen zum Erzeugen und Auswerten der Mikrowellen sind in der Figur nicht dargestellt. Der Mikrowellenresonator 6 ist durch eine Keramikscheibe 11 abgedeckt. Bei 12 sind die elektrischen Feldlinien dargestellt, die, wie man sieht, an der mit der Keramikscheibe abgedeckten Stirnseite des Mikrowellenresonators 6 stark konzentriert sind.

Durch das Verkürzen des Stiftes 8 gegenüber dem Hohlraum 7 gelingt es erstens, die Feldkonzentrationen im Bereich der Kanten und dem Bereich niedriger Feldstärke im Stiftzentrum vom Messgut zu distanzieren und im Bereich des Zigarettenkopfes ein plateauförmiges homogenes Messfeld zur Verfügung zu stellen. Nach Verkürzung des Stiftes 8 gegenüber dem Hohlraum 7 ist es möglich, den Stiftradius so zu wählen, dass das Messfeld im Bereich des Zigarettenkopfes konstant verläuft und außerhalb des Zigarettenkopfes in radialer Richtung exponentiell abfällt. Dadurch erst wird die Messung der flächenbezogenen Masse unabhängig von der örtlichen Position einer inhomogenen Masseverteilung möglich.

Durch das Verkürzen des Stiftes 8 gegenüber dem Hohlraum 7 gelingt es zweitens, die Abstrahlung von Mikrowellenenergie zu verhindern, da die Mikrowellen-Feldenergie stärker an den Resonator gebunden ist.

Durch das Verkürzen des Stiftes 8 gegenüber dem Hohlraum 7 gelingt es drittens, die Eindringtiefe des Streufeldes in den Zigarettenkopf zu erhöhen, da überexponentiell abfallende Feldkomponenten im Bereich der Kanten vom Zigarettenkopf entfernt werden, was effektiv zu einer Vergrößerung der Eindringtiefe in die Zigarettenenden führt.

Die Empfindlichkeit des Sensors wird durch das Verkürzen des Stiftes 8 gegenüber dem Hohlraum 7 sowie durch eine Vergrößerung des Stiftradius verringert. Durch das Verkürzen des Stiftes gegenüber dem Hohlraum sowie durch eine geeignete Wahl des Stiftradius ist es möglich einen Streufeldsensor mit hoher Querhomogenität des Messfeldes mit noch ausreichender Empfindlichkeit zu realisieren.

Die erfindungsgemäße Erfüllung der Bedingung 5 wird im Ausführungsbeispiel der Fig. 2 erreicht, indem der Stift 8 mit einer umlaufenden Einschnürung 9 versehen wird, welche Platz für die Antennen 10 zur kapazitiven Ein- und Auskopplung des Mikrowellensignals schafft. Die Antennen werden seitlich montiert.

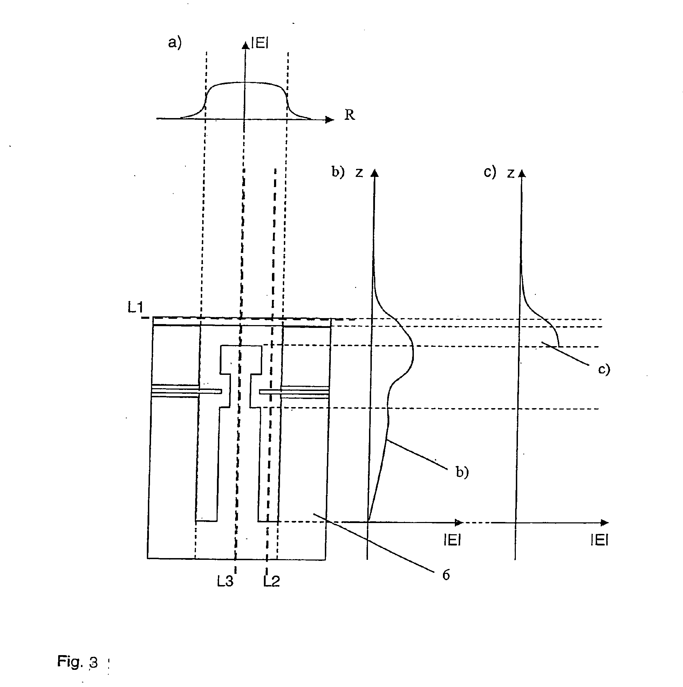

In Fig. 3 ist die Feldstärkeverteilung, das heißt die Intensität des elektrischen Feldes des Mikrowellenresonators 6 der Fig. 2 dargestellt, und zwar bei a) die Feldstärkeverteilung auf der Linie L1, bei b) die Feldstärkeverteilung auf der Linie L2 und bei c) die Feldstärkeverteilung auf der Linie L3.

Der Mikrowellenresonator 6 der Fig. 4 ist ähnlich aufgebaut wie derjenige der Fig. 2. Die Unterschiede sind die folgenden: Der Resonatorhohlraum 7 ist breiter ist als derjenige der Fig. 2, eine Einschnürung 9 ist nicht notwendig, um Platz für die Antennen 10 zu schaffen. Der Resonatorhohlraum 7 verjüngt sich aber in der Nähe seines offenen Endes und schafft dadurch eine Feldkonzentrationszone 13. Am offenen Ende erweitert sich der Mikrowellenresonators 6 kegelstumpfförmig, während sich der Stift 8 kegelstumpfförmig verjüngt. Die elektrischen Feldlinien sind wieder bei 12 gezeigt.

Die erfindungsgemäße Erfüllung der oben beschriebenen Bedingungen wird im Ausführungsbeispiel der Fig. 4 erreicht, indem erstens der Spalt zwischen Hohlraumwandung und Stift an der Öffnung verjüngt wird (Feldkonzentrationszone 13) und zweitens der Stift 8 an seiner Spitze eine konisch zulaufende Verjüngung und die Öffnung des Hohlraumes eine trichterförmige Aufweitung aufweist.

Durch Realisierung der Feldkonzentrationszone 13 und der Zone trichterförmiger Aufweitung gelingt es erstens, die störende Auswirkung von Feldkonzentrationen im Bereich der Kanten im Endbereich der Zigarette zu vermeiden und im Bereich des Zigarettenkopfes ein plateauförmiges Messfeld zur Verfügung zu stellen. Durch diese Maßnahmen ist es möglich, den Stiftradius so zu wählen, dass das Messfeld im Bereich des Zigarettenkopfes konstant verläuft und außerhalb des Zigarettenkopfes in radialer Richtung exponentiell abfällt.

Durch Realisierung der Feldkonzentrationszone 13 gelingt es zweitens, die Abstrahlung von Mikrowellenenergie zu verhindern, da das Feld innerhalb der Feldkonzentrationszone stark an den Resonator gebunden bleibt und somit nicht abgestrahlt wird.

Durch die Einrichtung einer Zone trichterförmiger Aufweitung gelingt es drittens, die Eindringtiefe des Streufeldes in den Zigarettenkopf zu erhöhen, da überexponentiell abfallende Feldkomponenten im Bereich der Kanten vermieden werden.

Durch Realisierung der Feldkonzentrationszone 13 gelingt es viertens, die Empfindlichkeit des Sensors stark zu heben, da das Verhältnis der Feldenergie in der Messzone oberhalb der Zone trichterförmiger Aufweitung relative zu der Feldenergie in der Feldkonzentrationszone groß genug ist.

Für die Anordnung der Antennen 10 unterhalb der Feldkonzentrationszone ist genügend Platz vorhanden.

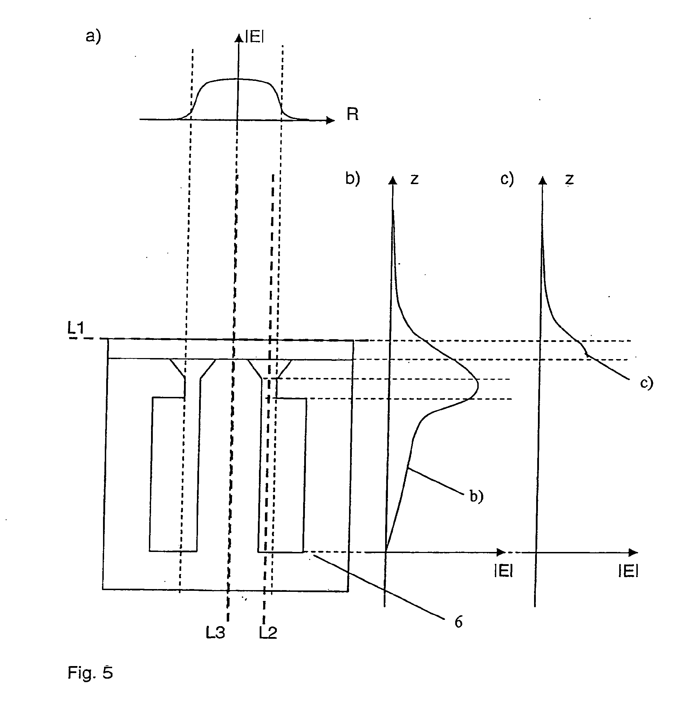

In Fig. 5 ist Feldstärkeverteilung, das heißt die Intensität des elektrischen Feldes des Mikrowellenresonators 6 der Fig. 4 dargestellt, und zwar bei a) die Feldstärkeverteilung auf der Linie L1, bei b) die Feldstärkeverteilung auf der Linie L2 und bei c) die Feldstärkeverteilung auf der Linie L3.

Beim Mikrowellen-Resonatorverfahren werden bei jeder Messung zwei Resonanzparameter gemessen. Die erste der gemessenen Größen ist die Verschiebung der Resonanzfrequenz A in Hz, die durch das Einbringen des Kopfes einer Zigarette in das Messfeld entsteht (siehe Fig. 1)

$$A = f_0 - f_m$$

$$(1)$$

mit $f_0$: Resonanzfrequenz des leeren Resonators in Hz

$f_m$: Resonanzfrequenz mit Zigarettenende im Messfeld des Resonators in Hz

Die zweite gemessene Größe ist die Vergrößerung der Halbwertsbreite der Resonanz B in Hz:

$$B = w_m - w_0$$

$$(2)$$

mit $w_0$: Halbwertsbreite der Resonanz des leeren Resonators in Hz

$w_m$: Halbwertsbreite der Resonanz mit Zigarettenende im Messfeld des Resonators in Hz

Da beide Parameter A und B in gleicher Weise masseabhängig sind, ist der Quotient der beiden Größen masseunabhängig. Der masseunabhängige Mikrowellen-Feuchtewert $\Phi$ ergibt sich folgendermaßen aus diesem Quotienten:

$$\Phi = \arctan (B/A)$$

$$(3)$$

Die Bestimmung der **flächenbezogenen Masse $m_f$** muss unter Berücksichtigung der Feuchte der Zigaretten erfolgen, da ein variierender Feuchtegehalt, bedingt durch die große Dielektrizitätskonstante des Wassers, die flächenbezogene Massemessung sonst unmöglich machen würde. Eine geeignete Beziehung zur Bestimmung der flächenbezogenen Masse mit Feuchtekompensation ist die Folgende:

$$m_f = a_1 \cdot A + a_2 \cdot A \cdot \phi + a_3$$

$$(4)$$

mit

$a_i$:    Kalibrationskoeffizienten

Die flächenbezogene Masse $m_f$ mit Feuchtekompensation ist der Messwert, der zur Entscheidung, ob ein Zigarettendefekt vorliegt, benötigt wird. Der Ausdruck (4) bietet große Vorteile:

1. Eine Feuchteabhängigkeit des Wertes für die flächenbezogene Masse $m_f$ ist ausgeschlossen. Die Defekterkennung erfolgt somit unabhängig vom Austrocknungsgrad der Zigarette. Es ist bei entsprechender Kalibration möglich, den Trockenwert der flächenbezogenen Masse direkt zu messen (wenn das Feuchtesignal zu einer Feuchtemessung genutzt wird).

2. Es ist eine parallele Feuchtemessung des Zigarettenendes möglich.

3. Die Signale sind sehr weitgehend sortenunabhängig bzw. unabhängig von Zuschlagsstoffen im Tabak. Sie sind auch geräteunabhängig. Somit ist nur eine einmalige Grundkalibration vor der Auslieferung des Gerätes nötig, die auf andere Geräte mit dem gleichen Resonatortyp übertragen werden kann.

4. Die Signale sind unabhängig von Farbschwankungen im Tabak.

Für die Bewertung des Signals, ob eine Fehlstelle vorliegt, sind zwei Verfahren möglich:

1. Nachdem das Gerät für die flächenbezogene Masse $m_f$ nach Beziehung (4) kali-briert wurde, wird ein Grenzwert $m_{fG}$ definiert. Wird dieser Grenzwert bei den on-line-Messungen unterschritten, wird die betreffende Zigarette als fehlerhaft charakterisiert.

2. Das Gerät ist für die Messung der flächenbezogenen Masse $m_f$ nach Beziehung (4) kalibriert. Bei der Messung erfolgt die Bildung des gleitenden Mittelwertes der flächenbezogenen Massen $m_{fmw}$ über eine Vielzahl von Zigaretten. Unterschreitet der gemessene Wert der flächenbezogenen Masse $m_f$ einer einzelnen Zigarette diesen Mittelwert stärker als ein zu definierender Grenzwert $\Delta m_{fG}$ (angegeben in Prozent des gleitenden Mittelwertes), wird die betreffende Zigarette als fehlerhaft charakterisiert. In diesem Fall wird also auf die Absolutwertanzeige der flächenbezogenen Masse verzichtet, es interessiert nur das Signal, relativ zu einem gleitenden Mittelwert über viele Zigaretten. Gleichung (4) wird deshalb nur zur Feuchtekompensation benötigt.

Da beim Mikrowellen-Resonatorverfahren immer die Resonanzeigenschaften des leeren Mikrowellenresonators mit denen des mit Messgut belasteten Resonators verglichen werden, ist die Messung der Resonanzeigenschaften des leeren Resonators von Zeit zu Zeit nötig (Leerabgleich). Die Resonanzeigenschaften des leeren Resonators verändern sich durch Temperaturschwankungen und durch eine mögliche Verschmutzung der Oberfläche. Es existieren verschiedene Möglichkeiten zur Durchführung dieses Leerabgleiches:

1. Die Sensoren werden mit einer geeigneten mechanischen Einrichtung in periodischen Zeitabständen vom Messgut weggefahren. Nach Entfernung der Sensoren vom Messgut wird der Leerabgleich durchgeführt und anschließend die Sensoren wieder in Kontakt mit dem Messgut gebracht.

2. Bei Messungen an der Transportvorrichtung, auf dem die Zigaretten in Gruppen angeordnet werden, kann die Leermessung automatisch in nicht besetzten Lücken auf dieser Transportvorrichtung durchgeführt werden. Die Leermessung könnte somit bei jeder Umdrehung der Transportvorrichtung erfolgen.

3. Bei Messungen an der Transportvorrichtung, auf dem die Zigaretten in Gruppen angeordnet werden, kann die Leermessung in einem bestimmten Bereich der Transportvorrichtung erfolgen, der durch eine Blindplatte, z.B. aus Kunststoff, besetzt ist. Durch periodische Messung dieser Blindplatte können die übrigen Signale bzgl. des Einflusses von Temperatur und Verschmutzung korrigiert werden.

Die regelmäßige Durchführung des Leerabgleiches ist besonders wichtig bei einer Auswertung der Messungen nach Methode 1 (Ermittlung eines Absolutwertes). Bei Auswertung nach Methode 2 (Ermittelung der Differenz zum Mittelwert) kann die Leermessung ganz entfallen, bzw. sie muss nur selten durchgeführt werden.

Es gibt verschiedene Einbaumöglichkeiten für die Mikrowellensensoren in einem Zigarettenpacker. Mit diesem Einbau sind die Möglichkeiten der Aussortierung der fehlerhaften Zigaretten verbunden:

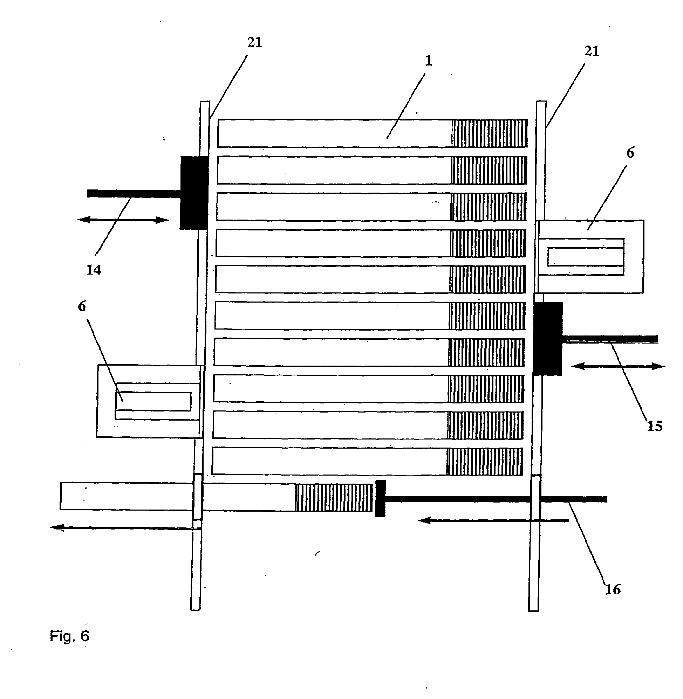

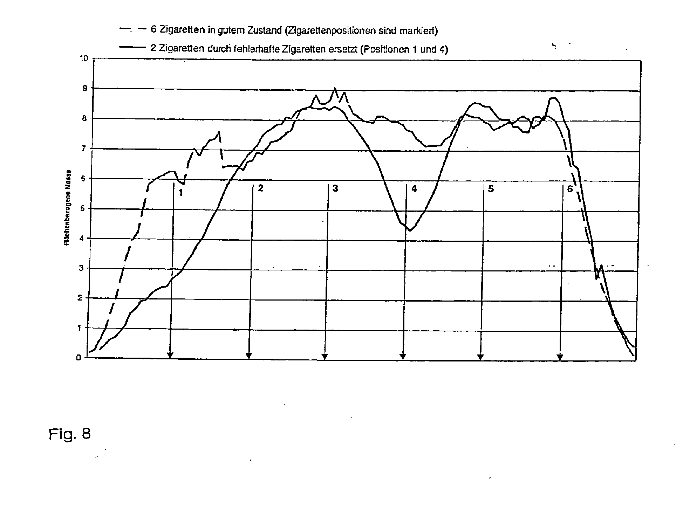

1. Die Zigaretten werden vor der Zusammenfassung in Gruppen auf einer speziellen Transportvorrichtung dieser durch einen Eintrittstrichter in mehreren Lagen zugeführt (siehe Fig. 6), wobei die Zigaretten 1 am Ende des Trichters in getrennten Reihen übereinander angeordnet sind. Durch Platzierung von Mikrowellenresonatoren 6 in diesen Reihen des Eintrittstrichters kann die Detektion fehlerhafter Zigaretten erfolgen. Zur Erkennung einer Zigarette 1 in ihrer optimalen Position relativ zum Sensor 6 kann ausgenutzt werden, dass der flächenbezogene Massewert zwischen zwei Zigaretten kurzzeitig ein Minimum durchläuft und der interessante Messwert als relatives Maximum zwischen zwei relativen Minima erscheint. Dies kann auch mit einer mit dem Takt der Maschine gekoppelten Zeitskalierung oder mit einer Lichtschranke zur Messwert-Aufnahme verbunden werden, da die Zigaretten 1 in etwa zeitlich äquidistant am Sensor vorbeigleiten. Da die Zahl der Reihen im Eintrittstrichter gleich der Zahl der Zigaretten 1 pro Packung ist und für jede Reihe der Zigaretten 1 jeweils ein Sensor 6 nötig ist, ist die Zahl der benötigten Sensoren 6 gleich der Zahl der Zigaretten 1 pro Packung (wird auf beiden Seiten der Zigarette detektiert, ist die Anzahl doppelt so groß). Nach der Detektion fehlerhafter Zigaretten 1 können diese durch eine entsprechende mechanische Einrichtung einzeln aussortiert werden. Dies ist in Fig. 8 schematisch dargestellt. Dort ist auch beispielhaft eine Einrichtung 16 schematisch dargestellt, mit der fehlerhafter Zigaretten 1 ausgestoßen werden (dies könnte auch pneumatisch durch einen Luftstoß geschehen).

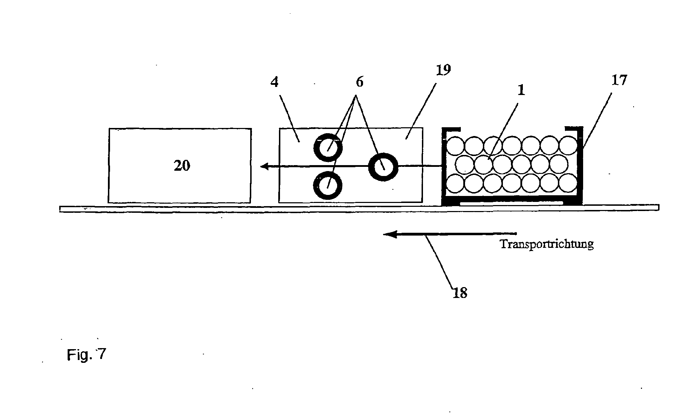

2. Die Detektion fehlerhafter Zigaretten kann auch nach der Zusammenfassung der Zigaretten zu Gruppen auf der Transportvorrichtung erfolgen (siehe Fig. 7). Für jede Zigarettenlage ist in diesen Gruppen ein einzelner Sensor 6 nötig. Damit ist die Zahl der benötigten Sensoren in diesem Fall gleich der Zahl der Zigarettenlagen in der Zigarettenpackung (wird auf beiden Seiten der Zigarettengruppe detektiert, ist die Anzahl doppelt so groß). Wenn in diesem Falle eine fehlerhafte Zigarette detektiert wird, erfolgt ein gruppenweiser Ausstoß der gesamten Zigarettengruppe. Die Messwertaufnahme kann in diesem Fall zu einem Zeitpunkt erfolgen, den die Packmaschine als elektrischen Puls definiert, da die Positionen jeder einzelnen Zigarette auf der Transportvorrichtung mit dem Maschinentakt verbunden sind und fest definiert sind. Dies ist schematisch in Fig. 9 gezeigt. Die Zigaretten 1 werden in Richtung des Pfeils 18 gruppenweise durch Halterungen 17 für diese Zigarettengruppen an Sensoren 6 in einer Halterung 19 vorbeibewegt. Wird eine fehlerhafte Zigarette 1 durch die Sensoren 6 festgestellt, wird die ganze Gruppe durch die Einheit 20 ausgestoßen.

Da die Signale der Mikrowellen-Streufeldsensoren 6 eine Abhängigkeit von der Entfernung zwischen Sensor 6 und Zigarette 1 zeigen, ist eine mechanische Einrichtung 14, 15 vorteilhaft, die die Zigaretten 1 direkt vor den Sensoren 6 durch mechanischen Andruck gegen eine Platte 21 ausrichtet, die sich auf gleicher Höhe wie die Mikrowellensensoren 6 befindet. Hierdurch wird sichergestellt, dass sich alle Zigaretten bei der Messung im gleichen Abstand zu den Mikrowellensensoren befinden.

Fig. 8 zeigt beispielhaft die Messung der feuchtekompensierten flächenbezogenen Masse (hier dimensionslos) einer Reihe von sechs Zigaretten, deren Positionen im Bild gekennzeichnet sind. Die Messung wurde zunächst mit sechs intakten Zigaretten durchgeführt. Anschließend wurden die Zigaretten an den Positionen 1 und 4 durch Zigaretten mit einem Defekt (Kopfausfall von Tabak) ersetzt. Die in Fig. 8 gezeigten Messkurven zeigen, dass sich die fehlerhaften Zigaretten eindeutig durch die Mikrowellen-Resonatormessung detektieren lassen.

**Patentansprüche**

1. Vorrichtung zum Detektieren und Aussondern von fehlerhaften Zigaretten (1) in einer Produktions/Verpackungsanlage für Zigaretten (1) mit einer Vorrichtung, mit der fehlerhafte Zigaretten (1) aus der geförderten Folge von Zigaretten (1) ausgesondert werden, **dadurch gekennzeichnet, dass** sie einen Generator und Auswertungsschaltungen (4) für hochfrequente elektromagnetische Felder und einen Sensor (6) ausgeführt als Mikrowellenresonator aufweist, der an seiner zur Zigarette gerichteten Stirnseite offen ist und auf seiner Achse einen elektrisch leitenden Stift (8) aufweist, der an der geschlossenen Stirnfläche des Mikrowellenresonators (6) angebracht ist und eine Länge hat, die ungefähr einem oder drei Viertel der Mikrowellenlänge entspricht und an dessen stirnfläche die Zigaretten (1) mit einem ihrer Enden vorbeigeführt werden und der an seiner Stirnfläche, deren Größe ungefähr der Größe der Stirnfläche der Zigaretten (1) entspricht, diese mit den hochfrequenten elektromagnetischen Feldern beaufschlagt, deren Änderungen beim Vorbeigang einer Zigarette (1) ausgewertet werden.

2. Vorrichtung nach Anspruch 1, **dadurch gekennzeichnet, dass** Sensoren (6) für beide Enden der Zigaretten (1) vorgesehen sind.

3. Vorrichtung nach Anspruch 1, **dadurch gekennzeichnet, dass** der Stift (8) eine ungefähr um 1 bis 20% geringere Länge als die axiale Ausdehnung des Mikrowellenresonators (6) hat.

4. Vorrichtung nach Anspruch 1 oder 3, **dadurch gekennzeichnet, dass** der Stift eine ungefähr 2 bis 8% geringere Länge als die axiale Ausdehnung des Mikrowellenresonators (6) hat.

5. Vorrichtung nach Anspruch 1, **dadurch gekennzeichnet, dass** der Mikrowellenresonator (6) sich an seinem offenen Ende verjüngt und dann nach außen hin kegelstumpfförmig erweitert, und dass sich der Stift (8) an diesem Ende des Mikrowellenresonators (6) gleichzeitig kegelstumpfförmig verjüngt.

6. Vorrichtung nach einem der Ansprüche 1 bis 5, **dadurch gekennzeichnet, dass** der Durchmesser des Stifts (8) ungefähr 30 bis 90 % des Innendurchmessers des Mikrowellenresonators (6) beträgt.

7. Vorrichtung nach einem der Ansprüche 1 bis 4, **dadurch gekennzeichnet, dass** der Durchmesser des Stifts (8) ungefähr 65 bis 85 % des Innendurchmessers des Mikrowellenresonators (6) beträgt.

8. Vorrichtung nach Anspruch 1 oder 6, **dadurch gekennzeichnet, dass** der Durchmesser des Stifts (8) ungefähr 30 bis 70 % des Innendurchmessers des Mikrowellenresonators (6) beträgt.

9. Vorrichtung nach einem der Ansprüche 1 bis 8, **dadurch gekennzeichnet, dass** die Öffnung des Sensors (6) mit einem Dielektrikum (11) verschlossen ist.

10. Vorrichtung nach einem der Ansprüche 1 bis 9, **dadurch gekennzeichnet, dass** die Öffnung des Sensors (6) mit einer Keramikscheibe (11) verschlossen ist.

11. Vorrichtung nach einem der Ansprüche 1 bis 10, **dadurch gekennzeichnet, dass** die Mikrowellenresonatoren (6) an einer Stelle vorgesehen sind, an der die Zigaretten (1) in Gruppen zu mehreren Schichten angeordnet sind, wobei für jede Schicht ein Mikrowellenresonator (beziehungsweise zwei Mikrowellenresonatoren (6) an beiden Enden der Zigaretten (1)) vorgesehen ist/sind.

12. Vorrichtung nach einem der Ansprüche 1 bis 10, **dadurch gekennzeichnet, dass** die Mikrowellenresonatoren (6) an einer Stelle vorgesehen sind, an der die Zigaretten (1) einzeln vorbeigeführt werden.

13. Vorrichtung nach einem der Ansprüche 1 bis 12, **dadurch gekennzeichnet, dass** der Renonatorhohlraum (7) und/ oder der Stift (8) zylindersymmetrisch sind.

14. Verfahren zum Detektieren und Aussondern von fehlerhaften Zigaretten (1) in einer Produktions/Verpackungsanlage für Zigaretten (1) mit einer Vorrichtung, mit der fehlerhaften Zigaretten (1) aus der geförderten Folge von Zigaretten (1) ausgesondert werden, **dadurch gekennzeichnet, dass** sie einen Generator und Auswertungsschaltungen (4) für hochfrequente elektromagnetische Felder und einen Sensor ausgeführt als Mikrowellenresonator aufweist, der an seiner zur Zigarette gerichteten Stirnseite offen ist und auf seiner Achse einen elektrisch leitenden Stift (8) aufweist, der an der geschlossenen Stirnfläche des Mikrowellenresonators (6) angebracht ist und eine Länge hat, die ungefähr einem oder drei Viertel der Mikrowellenlänge entspricht und an dessen Stirnfläche die Zigaretten (1) mit einem ihrer Enden vorbeigeführt werden und der an seiner Stirnfläche, deren Größe ungefähr der Größe der Stirnfläche der Zigaretten (1) entspricht, diese mit den hochfrequenten elektromagnetischen Feldern beaufschlagt, deren Änderungen beim Vorbeigang einer Zigaretten (1) ausgewertet werden.

15. Verfahren nach Anspruch 14, **dadurch gekennzeichnet, dass** Sensoren (6) für beide Enden der Zigaretten (1) verwendet werden.

16. Verfahren nach Anspruch 14 oder 15, **dadurch gekennzeichnet, dass** alle Zigaretten (1) ausgesondert werden, deren ermittelter Messwert sich von einem vorgegebenen Wert um eine vorgegebene Differenz unterscheidet.

17. Verfahren nach Anspruch 14 oder 15, **dadurch gekennzeichnet, dass** alle Zigaretten (1) ausgesondert werden, deren ermittelter Messwert sich von einem gleitenden Mittelwert um einen vorgegebenen Prozentsatz unterscheidet.

18. Verfahren nach einem der Ansprüche 14 bis 17, **dadurch gekennzeichnet, dass** im Falle der Verwendung von Mikrowellenresonatoren zur Messung der flächenbezogenen Masse der Einfluss der Feuchte korrigiert wird (Feuchtekompensation).

19. Verfahren nach einem der Ansprüche 14 bis 18, **dadurch gekennzeichnet, dass** im Falle der Verwendung von Mikrowellenresonatoren die Feuchte der Zigarettenenden unabhängig von der Tabakmasse in den Zigarettenenden ausgegeben wird.

20. Verfahren nach einem der Ansprüche 14 bis 19, **dadurch gekennzeichnet, dass** Veränderungen des leeren Sensors durch eine wiederholte Messung der Eigenschaften des Sensors ohne Zigaretten kompensiert werden (periodischer Leerabgleich).

9

**Claims**

1. Apparatus for detection and segregation of faulty cigarettes (1) in a production/packaging installation for cigarettes (1) having an apparatus by means of which faulty cigarettes (1) are segregated from the conveyed sequence of cigarettes (1), **characterized in that** the apparatus has a generator and evaluation circuits (4) for radio-frequency electromagnetic fields and has a sensor (6) in the form of a microwave resonator, which is open on its end face pointing towards the cigarette and has an electrically conductive pin (8) on its axis, which pin is fitted to the closed end surface of the microwave resonator (6) and has a length which corresponds approximately to one quarter or three quarters of the microwave wavelength and past whose end surface the ends of the cigarettes (1) are passed and which applies the radio-frequency electromagnetic fields to the end surface of the sensor (2, 6), whose size corresponds approximately to the size of the end surface of the cigarettes (1), with the changes in the electromagnetic fields as a cigarette (1) passes being evaluated.

2. Apparatus according to Claim 1, **characterized in that** sensors (6) are provided for both ends of the cigarettes (1).

3. Apparatus according to Claim 1, **characterized in that** the pin (8) has a length which is approximately 1 to 20% less than the axial extent of the microwave resonator (6).

4. Apparatus according to Claim 1 or 3, **characterized in that** the pin has a length which is less by approximately 2 to 8% than the axial extent of the microwave resonator (6).

5. Apparatus according to Claim 1, **characterized in that** the microwave resonator (6) tapers at its open end and then widens outwards in a truncated-conical shape, and **characterized in that** the pin (8) at the same time tapers in a truncated-conical shape at this end of the microwave resonator (6).

6. Apparatus according to one of Claims 1 to 5, **characterized in that** the diameter of the pin (8) is approximately 30 to 90% of the internal diameter of the microwave resonator (6).

7. Apparatus according to one of Claims 1 to 4, **characterized in that** the diameter of the pin (8) is approximately 65 to 85% of the internal diameter of the microwave resonator (6).

8. Apparatus according to Claim 1 or 6, **characterized in that** the diameter of the pin (8) is approximately 30 to 70% of the internal diameter of the microwave resonator (6).

9. Apparatus according to one of Claims 1 to 8, **characterized in that** the opening in the sensor (6) is closed by a dielectric (11).

10. Apparatus according to one of Claims 1 to 9, **characterized in that** the opening in the sensor (6) is closed by a ceramic disk (11).

11. Apparatus according to one of Claims 1 to 10, **characterized in that** the microwave resonators (6) are provided at a point at which the cigarettes (1) are arranged in groups to form a plurality of layers, with one microwave resonator (or two microwave resonators (6) at both ends of the cigarettes (1)) being provided for each layer.

12. Apparatus according to one of Claims 1 to 10, **characterized in that** the microwave resonators (6) are provided at a point past which the cigarettes (1) are passed individually.

13. Apparatus according to one of Claims 1 to 12, **characterized in that** the resonator cavity (7) and/or the pin (8) are/is cylindrically symmetrical.

14. Method for detection and segregation of faulty cigarettes (1) in a production/packaging installation for cigarettes (1) having an apparatus by means of which faulty cigarettes (1) are segregated from the conveyed sequence of cigarettes (1), **characterized in that** the apparatus has a generator and evaluation circuits (4) for radio-frequency electromagnetic fields and has a sensor in the form of a microwave resonator, which is open on its end face pointing towards the cigarette and has an electrically conductive pin (8) on its axis, which pin is fitted to the closed end surface of the microwave resonator (6) and has a length which corresponds approximately to one quarter or three quarters of the microwave wavelength and past whose end surface the ends of the cigarettes (1) are passed and which applies the radio-frequency electromagnetic fields to the end surface of the sensor, whose size corresponds approximately to the size of the end surface of the cigarettes (1), with the changes in the electromagnetic fields as a cigarette (1) passes being evaluated.

15. Method according to Claim 14, **characterized in that** sensors (6) are provided for both ends of the cigarettes (1).

16. Method according to Claim 14 or 15, **characterized in that** all of the cigarettes (1) are segregated whose determined measured value differs by a predetermined difference from a predetermined value.

17. Method according to Claim 14 or 15, **characterized in that** all of the cigarettes (1) are segregated whose determined measured value differs by a predetermined percentage from a sliding mean value.

18. Method according to one of Claims 14 to 17, **characterized in that** the influence of moisture is corrected for (moisture compensation) when microwave resonators are used to measure the area-related mass.

19. Method according to one of Claims 14 to 18, **characterized in that** the moisture of the cigarette ends is emitted independently of the tobacco mass in the cigarette ends when using microwave resonators.

20. Method according to one of Claims 14 to 19, **characterized in that** changes in the empty sensor are compensated for by repeated measurement of the characteristics of the sensor without cigarettes (periodic empty adjustment).

**Revendications**

1. Dispositif destiné à détecter et rejeter des cigarettes (1) défectueuses dans une installation de production et d'emballage de cigarettes (1), comportant un dispositif, par lequel les cigarettes (1) défectueuses sont rejetées hors de la suite de cigarettes (1) transportées, **caractérisé en ce qu'**il comporte un générateur et des circuits d'analyse (4) pour des champs électromagnétiques à haute fréquence et un capteur (6) réalisé sous la forme d'un résonateur à micro-ondes, qui est ouvert sur son côté frontal orienté vers la cigarette et comporte, sur son axe, une broche (8) électroconductrice, qui est montée sur la face frontale fermée du résonateur à micro-ondes (6) et qui a une longueur correspondant à peu près à une longueur de micro-ondes ou aux trois-quarts d'une longueur de micro-ondes, et le long de la face frontale de laquelle les cigarettes (1) sont guidées avec l'une de leurs extrémités et qui, sur sa face frontale, dont la dimension correspond à peu près à la dimension de la face frontale des cigarettes (1), sollicite celles-ci avec les champs électromagnétiques à haute fréquence, dont les variations lors du passage d'une cigarette (1) sont analysées.

2. Dispositif selon la revendication 1, **caractérisé en ce qu'**il est prévu des capteurs (6) pour les extrémités des cigarettes (1).

3. Dispositif selon la revendication 1, **caractérisé en ce que** la broche (8) a une longueur qui est de 1 à 20 % environ inférieure à la dimension axiale du résonateur à micro-ondes (6).

4. Dispositif selon la revendication 1 ou 3, **caractérisé en ce que** la broche a une longueur qui est de 2 à 8 % environ inférieure à la dimension axiale du résonateur à micro-ondes (6).

5. Dispositif selon la revendication 1, **caractérisé en ce que** le résonateur à micro-ondes (6) se rétrécit au niveau de son extrémité ouverte et s'élargit ensuite en forme de cône tronqué vers l'extérieur, et **en ce que** la broche (8), au niveau de cette extrémité du résonateur à micro-ondes (6), se rétrécit en même temps en forme de cône tronqué.

6. Dispositif selon l'une quelconque des revendications 1 à 5, **caractérisé en ce que** le diamètre de la broche (8) est égal à peu près à 30 à 90 % du diamètre intérieur du résonateur à micro-ondes (6).

7. Dispositif selon l'une quelconque des revendications 1 à 4, **caractérisé en ce que** le diamètre de la broche (8) est égal à peu près à 65 à 85 % du diamètre intérieur du résonateur à micro-ondes (6).

8. Dispositif selon la revendication 1 ou 6, **caractérisé en ce que** le diamètre de la broche (8) est égal à peu près à 30 à 70 % du diamètre intérieur du résonateur à micro-ondes (6).

9. Dispositif selon l'une quelconque des revendications 1 à 8, **caractérisé en ce que** l'ouverture du capteur (6) est fermée par un diélectrique (11).

10. Dispositif selon l'une quelconque des revendications 1 à 9, **caractérisé en ce que** l'ouverture du capteur (6) est fermée par un disque céramique (11).

11. Dispositif selon l'une quelconque des revendications 1 à 10, **caractérisé en ce que** les résonateurs à micro-ondes (6) sont prévus à un emplacement, au niveau duquel les cigarettes (1) sont disposées en groupes sur plusieurs couches, sachant que pour chaque couche est/sont prévu(s) un résonateur à micro-ondes (éventuellement deux résonateurs à micro-ondes (6) sur les deux extrémités des cigarettes (1)).

12. Dispositif selon l'une quelconque des revendications 1 à 10, **caractérisé en ce que** les résonateurs à micro-ondes (6) sont prévus à un emplacement le long duquel les cigarettes (1) sont guidées séparément.

13. Dispositif selon l'une quelconque des revendications 1 à 12, **caractérisé en ce que** la cavité (7) du résonateur et/ou la broche (8) sont cylindriques et symétriques.

14. Procédé destiné à détecter et rejeter des cigarettes (1) défectueuses dans une installation de production et d'emballage de cigarettes (1), comportant un dispositif, par lequel les cigarettes (1) défectueuses sont rejetées hors de la suite de cigarettes (1) transportées, **caractérisé en ce que** ledit dispositif comporte un générateur et des circuits d'analyse (4) pour des champs électromagnétiques à haute fréquence et un capteur réalisé sous forme de résonateur à micro-ondes, qui est ouvert sur sa face frontale orientée vers la cigarette et comporte, sur son axe, une broche (8) électroconductrice, qui est montée sur la face frontale fermée du résonateur à micro-ondes (6) et qui a une longueur correspondant à peu près à une longueur de micro-ondes ou aux trois-quarts d'une longueur de micro-ondes, et le long de la face frontale de laquelle les cigarettes (1) sont guidées avec l'une de leurs extrémités et qui, sur sa face frontale, dont la dimension correspond à peu près à la dimension de la face frontale des cigarettes (1), sollicite celles-ci avec les champs électromagnétiques à haute fréquence, dont les variations lors du passage d'une cigarette (1) sont analysées.

15. Procédé selon la revendication 14, **caractérisé en ce que** des capteurs (6) sont utilisés pour les deux extrémités des cigarettes (1).

16. Procédé selon la revendication 14 ou 15, **caractérisé en ce que** toutes les cigarettes (1), dont la valeur de mesure déterminée s'écarte d'une valeur prédéfinie selon une différence prédéfinie, sont rejetées.

17. Procédé selon la revendication 14 ou 15, **caractérisé en ce que** toutes les cigarettes (1), dont la valeur de mesure déterminée se différence d'une valeur moyenne flottante selon un pourcentage prédéfini, sont rejetées.

18. Procédé selon l'une quelconque des revendications 14 à 17, **caractérisé en ce que**, en cas d'utilisation de résonateurs à micro-ondes pour mesurer la masse par unité de surface, l'influence de l'humidité est corrigée (compensation d'humidité).

19. Procédé selon l'une quelconque des revendications 14 à 18, **caractérisé en ce que**, en cas d'utilisation de résonateurs à micro-ondes, l'humidité des extrémités des cigarettes est signalée indépendamment de la masse du tabac dans les extrémités des cigarettes.

20. Procédé selon l'une quelconque des revendications 14 à 19, **caractérisé en ce que** des variations du capteur vide sont compensées par une mesure itérative des propriétés du capteur sans cigarette (équilibrage périodique du capteur vide).

Fig. 1

Fig. 2

Fig. 3

Fig. 4

Fig. 5

Fig. 6

4    6    19    1    17

20

Transportrichtung

18

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4376484 A
- DE 3439945
- DE 2236218 A
- DE 2625001 A
- US 4742668 A

- US 3993194 A
- DE 4004119 C2
- EP 0889321 A1
- EP 1371979 A1